# EUROPEAN PATENT APPLICATION

(11) **EP 4 654 343 A1**
(43) Date of publication of application: **26.11.2025**
(21) Application number: 24213001.1
(22) Date of filing: 14.11.2024
(51) Int. Cl.: H01M 50/147, H01M 50/15, H01M 50/176, H01M 50/186, H01M 50/548, H01M 50/552

(54) **SECONDARY BATTERY WITH MODULAR TERMINAL ASSEMBLED AND METHOD OF MANUFACTURING THE SAME**

(30) Priority: 20.05.2024 KR 20240065365
(71) Applicant: SAMSUNG SDI CO., LTD., Yongin-si, Gyeonggi-do 17084 (KR)
(72) Inventor: JEONG, Myungha, 17084 Yongin-si (KR)
(74) Representative: Marks & Clerk LLP

(57) **Abstract**

A secondary battery includes a case with an opening, an electrode assembly accommodated in the case, and a cap assembly having a cap plate joined to the opening of the case, the cap plate including a terminal accommodating hole, and a terminal module electrically connected to the electrode assembly, the terminal module having a top surface joint portion insertable into the terminal accommodating hole of the cap plate, the top surface joint portion being joined to a top surface of the cap plate and having an internal through-hole space, a bottom surface j oint portion inserted into the terminal accommodating hole and joined to a bottom surface of the cap plate, a terminal plate in the internal through-hole space of the top surface joint portion, and an insulator between the terminal plate and each of the top surface joint portion and the bottom surface joint portion.

## Description

### BACKGROUND

### 1. Field

The present disclosure relates to a secondary battery including a modular terminal assembled to a cap plate and a method of manufacturing the same.

### 2. Description of the Related Art

Secondary batteries are batteries that can be charged and discharged, unlike primary batteries that cannot be recharged. A secondary battery includes an electrode assembly composed of a positive electrode plate, a separator, and a negative plate, a case (or a can) that accommodates the electrode assembly, and a terminal that can connect the electrode assembly to an external power source or a load.

The terminal is electrically connected to a tab formed in the electrode assembly and is installed on a cap plate joined to the case to be positioned outside the case. An electrolyte injection port and a vent for discharging gas generated inside the electrode assembly may be formed in the cap plate.

In this way, an assembly, in which the terminal, the vent, the electrolyte injection port, and other structures are combined with the cap plate, is called a cap assembly. The terminal located outside the cap assembly is joined to a current collector or a subplate to be connected to the electrode assembly inside the case. Secondary batteries of various sizes and shapes are being manufactured according to various applications and uses, and accordingly, various forms of cap plate-terminal bonding structures and necessary members therefor are required.

The above information disclosed in this Background section is for enhancement of understanding of the background of the present disclosure, and therefore, it may contain information that does not constitute related (or prior) art.

### SUMMARY

According to an aspect of the present disclosure, there is provided a secondary battery including a case with an opening formed at least at one end, an electrode assembly accommodated in the case, and a cap assembly including a cap plate joined to the opening of the case and a terminal module electrically connected to the electrode assembly, wherein the terminal module includes a top surface joint portion inserted into a terminal module accommodating hole formed in the cap plate, joined to a top surface of the cap plate, and having an internal through-hole space, a bottom surface joint portion inserted into the terminal module accommodating hole and joined to a bottom surface of the cap plate, a terminal plate located in the internal through-hole space of the top surface joint portion, and an insulator configured to electrically insulate the terminal plate from the top surface joint portion and the bottom surface joint portion.

According to another aspect of the present disclosure, there is provided a method of manufacturing a secondary battery including manufacturing a case with an opening, manufacturing an electrode assembly accommodated in the case, manufacturing a cap plate with a terminal module accommodating hole, manufacturing a terminal module electrically connected to the electrode assembly, assembling the terminal module to the cap plate, and inserting the electrode assembly into the case and joining the cap plate to the opening of the case, wherein the assembling of the terminal module to the cap plate includes inserting the terminal module into the terminal module accommodating hole formed in the cap plate and joining the terminal module to a top surface of the cap plate, and joining the terminal module inserted into the terminal module accommodating hole to a bottom surface of the cap plate.

In addition, according to still another aspect of the present disclosure, there is provided a terminal module including a top surface joint portion inserted into a terminal module accommodating hole formed in a cap plate joined to a case of a secondary battery, joined to a top surface of the cap plate, and having an internal through-hole space, a bottom surface joint portion inserted into the terminal module accommodating hole and joined to a bottom surface of the cap plate, a terminal plate located in the internal through-hole space of the top surface joint portion, and an insulator configured to electrically insulate the terminal plate from the top surface joint portion and the bottom surface joint portion.

According to another aspect of the present disclosure, there is provided a secondary battery module comprising a plurality of the second batteries.

However, aspects of the present disclosure are not limited to the above, and other aspects not specifically mentioned herein, and aspects of the present disclosure that would address such problems, will be clearly understood by those skilled in the art from the description of the present disclosure below.

At least some of the above and other features of the invention are set out in the claims.

### BRIEF DESCRIPTION OF THE DRAWINGS

Features will become apparent to those of skill in the art by describing in detail example embodiments with reference to the attached drawings, in which:
FIG. 1A is a top perspective view of a secondary battery with a top-terminal structure according to some embodiments of the present disclosure;
FIG. 1B is a top perspective view of a secondary battery with a top-terminal structure according to some other embodiments of the present disclosure;
FIG. 2 is a cross-sectional view taken along line I-I' of FIGS. 1A and 1B;
FIG. 3 is an exploded perspective view illustrating a schematic configuration of a cap assembly according to some embodiments;
FIG. 4 is an exploded perspective view illustrating a schematic configuration of a cap assembly according to some other embodiments;
FIG. 5 is an exploded perspective view illustrating a configuration of a terminal module according to some embodiments of the present disclosure;
FIG. 6 is a perspective view of a cap plate joint body of the terminal module;
FIG. 7 is a cross-sectional view showing a coupling relationship of the terminal module shown in FIG. 5;
FIG. 8 is a cross-sectional view of a terminal module accommodating hole in a cap plate;
FIG. 9 is a cross-sectional view showing a state where the terminal module of FIG. 7 is coupled to the cap plate of FIG. 8;
FIG. 10 shows a state where the terminal module is completely joined to the cap plate;
FIG. 11 is a cross-sectional view of a terminal module according to some other embodiments;
FIG. 12 is a view providing an additional explanation regarding the flatness of a top surface of a terminal plate and a top surface of the cap plate;
FIGS. 13A to 13C show states where sealing members are additionally used in the cap plate on which the terminal module is assembled;
FIG. 14 is a top perspective view of a secondary battery module in which secondary batteries are arranged according to one or more embodiments of the present disclosure;
FIG. 15 is a view of a secondary battery pack including the secondary battery module illustrated in FIG. 14; and
FIG. 16 is a conceptual view of a vehicle including the secondary battery pack illustrated in FIG. 15.

### DETAILED DESCRIPTION OF THE DRAWINGS

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her example embodiments in the best way.

The embodiments described in this specification and the configurations shown in the drawings are only some of one or more embodiments of the present disclosure and do not represent all of the aspects of the present disclosure. Accordingly, it should be understood that there may be various equivalents and modifications that can replace or modify one or more embodiments described herein at the time of filing this application.

It will be understood that if an element or layer is referred to as being "on," "connected to," "linked to" or "coupled to" another element or layer (or "between" two elements or layers), it may be directly on, connected, linked or coupled to the other element or layer (or directly between the two elements or layers) or one or more intervening elements or layers may also be present. When an element or layer is referred to as being "directly on," "directly connected to," "directly linked to" or "directly coupled to" another element or layer (or "directly between" two elements or layers), there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

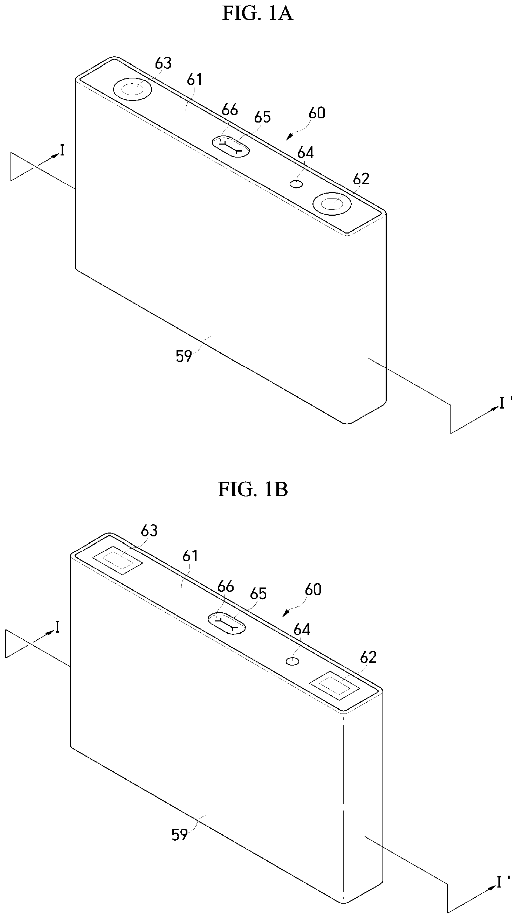

FIG. 1A is a top perspective view of a secondary battery according to some embodiments of the present disclosure.

Referring to FIG. 1A, a case 59 may define an overall appearance of the prismatic secondary battery, and may be made of a conductive metal, e.g., aluminum, aluminum alloy, or nickel-plated steel. In one or more embodiments, the case 59 may provide a space for accommodating an electrode assembly therein.

A cap assembly 60 may include a cap plate 61 that covers an opening of the case 59, and the cap assembly 60 and the cap plate 61 may be made of a conductive material. Here, a first terminal 62 and a second terminal 63 may be electrically connected to respective positive and negative (or negative and positive) electrodes inside the case 59, and may be installed to protrude outwardly through the cap plate 61. For example, as shown in FIG. 1A, the first terminal 62 and the second terminal 63 may be circular (in a top view).

The cap plate 61 may be equipped with an electrolyte injection port 64 and a vent 66 welded in a vent hole 65. The vent 66 may discharge gas generated inside the secondary battery, e.g., inside the case 59.

FIG. 1B is a top perspective view of a secondary battery with a top-terminal structure according to some other embodiments of the present disclosure.

Referring to FIG. 1B, the case 59, the cap assembly 60, and the cap plate 61 may be substantially the same as in FIG. 1A, with the exception that the first terminal 62 and the second terminal 63 may be rectangular. The other components are the same as in the embodiments of FIG. 1A.

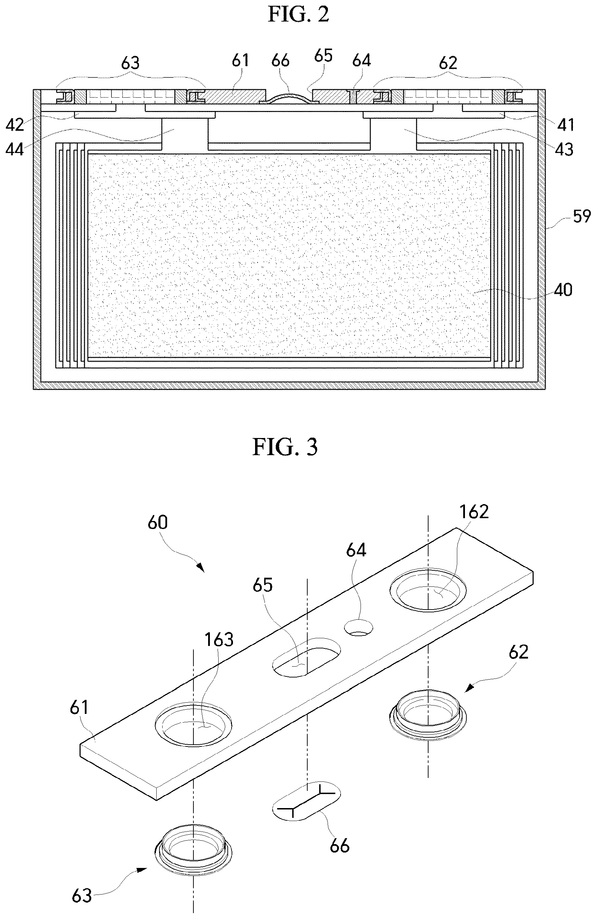

FIG. 2 is a cross-sectional view taken along line I-I' of FIGS. 1A and 1B, illustrating an internal configuration and a structure of the cap assembly 60 of the secondary battery according to some embodiments of the present disclosure.

Referring to FIG. 2, a prismatic secondary battery may include an electrode assembly 40, a first current collector 41, the first terminal 62, a second current collector 42, the second terminal 63, and the cap assembly 60 (shown in FIGs 1, 2).

The electrode assembly 40 may be formed by winding or stacking a stack of a first electrode plate, a separator, and a second electrode plate, which are formed as thin plates or films. If the electrode assembly 40 is a wound stack, a winding axis may be parallel to the longitudinal direction of the case 59. In other embodiments, the electrode assembly 40 may be a stack type rather than a winding type, and the shape of the electrode assembly 40 is not limited in the present disclosure. In one or more embodiments, the electrode assembly 40 may be a Z-stack electrode assembly in which a positive electrode plate and a negative electrode plate are respectively inserted into both sides of a separator, which is then bent into a Z-stack. In one or more embodiments, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. In one or more embodiments, the reverse is also possible.

The first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab 43 (e.g., a first uncoated portion) that is a region to which the first electrode active material is not applied. The first electrode tab 43 may act as a current flow path between the first electrode plate and the first current collector 41. In some embodiments, if the first electrode plate is manufactured, the first electrode tab 43 may be formed by being cut in advance to protrude to one side of the electrode assembly 40, or the first electrode tab 43 may protrude to one side of the electrode assembly 40 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 44 (e.g., a second uncoated portion) that is a region to which the second electrode active material is not applied. The second electrode tab 44 may act as a current flow path between the second electrode plate and the second current collector 42. In some embodiments, the second electrode tab 44 may be formed by being cut in advance to protrude to the other side (e.g., the opposite side) of the electrode assembly if the second electrode plate is manufactured, or the second electrode plate may protrude to the other side of the electrode assembly more than (e.g., farther than or beyond) the separator without being separately cut.

For example, as shown in FIG. 2, the first electrode tab 43 and the second electrode tab 44 may be located on the top of the electrode assembly 40. In another example, the first electrode tab 43 may be located on the right side of the electrode assembly 40, and the second electrode tab 44 may be located on the left side of the electrode assembly 40. In yet another example, the first and second electrode tabs 43 and 44 may be located on a same lateral side of the electrode assembly 40. Here, for convenience of description, the left and right sides are defined according to the secondary battery as oriented in FIG. 2, and the positions thereof may change if the secondary battery is rotated left and right or up and down.

The separator reduces or prevents the likelihood of a short circuit between the first electrode and the second electrode, while allowing movement of lithium ions therebetween. The separator may be made of, e.g., a polyethylene film, a polypropylene film, a polyethylene-polypropylene film, or the like.

In some embodiments, the electrode assembly 40 may be accommodated in the case 59 along with an electrolyte.

The first current collector 41 and the second current collector 42 may be respectively connected to the first terminal 62 and the second terminal 63 described in FIG. 1 through connection members. In some embodiments, the connection members may each have an outer peripheral surface that is threaded, and may be fastened to the first terminal 62 and the second terminal 63 (e.g., by screws, by riveting, or by welding).

As described above, the secondary battery shown in FIG. 2 may have a top-tab structure in which the electrode assembly 40 is disposed so that the first electrode tab 43 and the second electrode tab 44 are located at an upper part of the secondary battery. In addition, since the first terminal 62 and the second terminal 63 are located at the top of the case 59, the secondary battery may fall within the category of a top-terminal structure. In other words, the secondary battery may have a structure in which the first electrode tab 43 and the second electrode tab 44 of the electrode assembly 40 are located at an upper part inside the case 59 and the first current collector 41 and the second current collector 42 are respectively connected thereto, and the first terminal 62 and the second terminal 63 respectively connected to the first and second current collectors 41 and 42 are installed on the outside of the cap plate 61.

FIG. 3 is an exploded perspective view illustrating a schematic configuration of the cap assembly 60 according to some embodiments.

Referring to FIG. 3, the circular first terminal 62 and second terminal 63 may be respectively inserted (e.g., insertable) and joined (e.g., joinable or attachable) into the circular first terminal accommodating hole 162 and second terminal accommodating hole 163, respectively, formed in the cap plate 61. The cap plate 61 may also have the vent hole 65 to which the vent 66 may be joined and the electrolyte injection port 64. A detailed configuration of the first terminal 62 and the second terminal 63 and their coupling relationship with the first and second terminal accommodating holes 162 and 163 of the cap plate 61 will be described below.

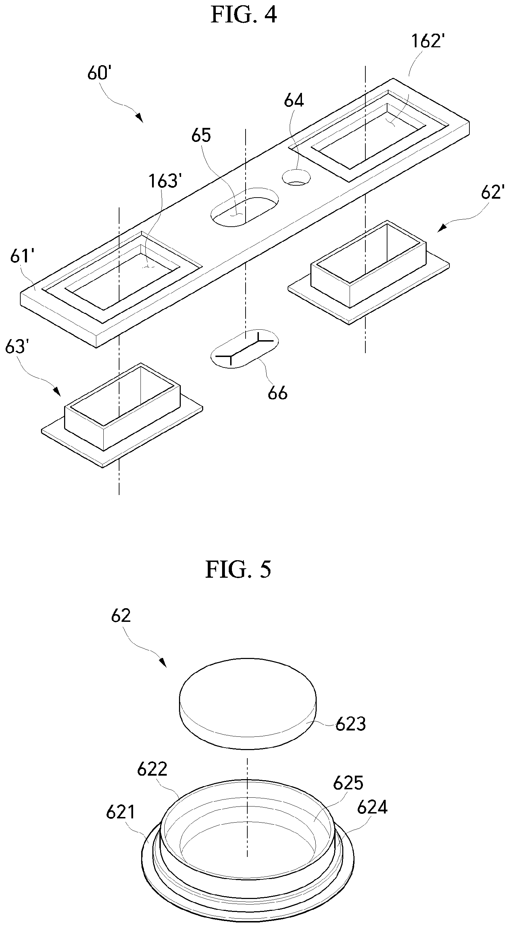

FIG. 4 is an exploded perspective view illustrating a schematic configuration of a cap assembly 60' according to some other embodiments.

Referring to FIG.4, a rectangular first terminal 62' and a rectangular second terminal 63' may be respectively inserted and joined into a rectangular first terminal accommodating hole 162' and a rectangular second terminal accommodating hole 163' formed in the cap plate 61'. Other components are similar to those in the embodiment of FIG. 3.

FIG. 5 is an exploded perspective view illustrating a configuration of the first terminal 62 shown in FIG. 3. Since the configuration of the second terminal 63 is the same as that of the first terminal 62, a description thereof is omitted here.

In addition, the first terminal 62 shown in FIG. 5 is a circular terminal as shown in FIG. 3, but the rectangular terminal shown in FIG. 4 has virtually the same structure. Therefore, a separate description of the rectangular terminal shown in FIG. 4 is omitted here.

Referring to FIG. 5, the first terminal 62 may be inserted into the terminal accommodating hole 162 of the cap plate 61 from bottom to top (e.g., the first terminal 62 may be inserted from a direction of a surface of the cap plate 61 that faces the interior of the case 59). When inserted from bottom to top, since a diameter of a bottom surface joint portion 621 is greater than a diameter of the terminal accommodating hole 162, the bottom surface joint portion 621 may be caught on and come into contact with a bottom surface of the cap plate 61 (e.g., the bottom surface joint portion 621 may be flush against and may directly contact the surface of the cap plate 61 that faces the interior of the case 59). The bottom surface joint portion 621 may be joined to the bottom surface of the cap plate 61 by a welding or non-welding (e.g., a press fitting).

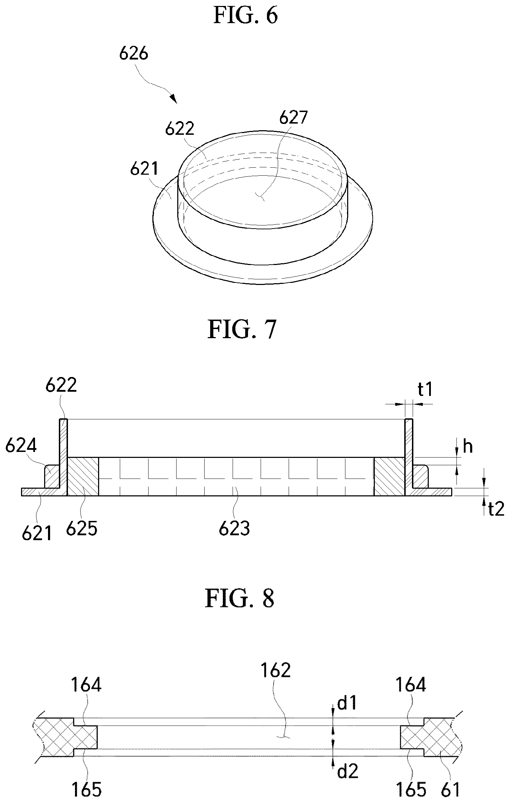

In addition, the first terminal 62 may have a top surface joint portion 622 joined to a top surface of the cap plate 61 after being inserted into the terminal accommodating hole 162 of the cap plate 61. For example, as illustrated in FIG. 6, the top surface joint portion 622 may be connected to the bottom surface joint portion 621 (e.g., the top surface joint portion 622 and the bottom surface j oint portion 621 may be integral with each other to define a single, uniform, and seamless monolithic structure). As shown in FIG. 5, the top surface joint portion 622 may have a through-hole space therein, created by being circularly surrounded by a vertical wall. (In other embodiments, in the case of FIG. 4, the internal through-hole space would be created by being rectangularly surrounded by the vertical wall.) As will be described below, the top surface joint portion 622 may be joined (e.g., affixed or connected) to the top surface of the cap plate 61 by bending the vertical wall radially outward.

A terminal plate 623 may be inserted into the internal space formed by the vertical wall of the top surface joint portion 622. In FIG. 5, the terminal plate 623 is illustrated as a circular shape. (In the embodiments of FIG. 4, the terminal plate may have a rectangular shape.)

The first terminal 62 may also include an insulator 625 to insulate the terminal plate 623 from the cap plate 61. In the embodiments of FIG. 5, the insulator 625 may be located between an inner circumferential surface of the top surface joint portion 622 and an outer circumferential surface of the terminal plate 623 (e.g., in a radial direction) to insulate the terminal plate 623 from the bottom surface joint portion 621 and the top surface joint portion 622. For example, referring to FIG. 5, the insulator 625 may have a ring shape continuously extending along and in contact with the inner circumferential surface of the top surface joint portion 622, and a diameter of the terminal plate 623 may substantially equal an inner circumferential diameter of the ring shape of the insulator 625 (e.g., the terminal plate 623 may fit into and seal the opening of the ring shape of the insulator 625). The insulator 625 may be integrally formed by insert injection molding during manufacturing of the bottom surface joint portion 621 and the top surface joint portion 622 (e.g., the insulator 625 may be formed simultaneously and in a same process with the bottom surface j oint portion 621 and the top surface j oint portion 622 to define a single unit), or may be separately manufactured and assembled.

In FIG. 5, an outer portion 624 at an outer edge of each of the top surface joint portion 622 and the bottom surface j oint portion 621 may be a part of the insulator 625. The outer portion 624 of the insulator 625 may be designed to be in contact with an outer circumferential surface of the top surface joint portion 622 because the insulator 625 must be structurally coupled to the top surface joint portion 622 and/or the bottom surface joint portion 621 in order to be attached and fixed to the first terminal 62.

FIG. 6 is a perspective view illustrating a structure in which the bottom surface joint portion 621 and the top surface j oint portion 622 are connected to each other. The bottom surface joint portion 621 and the top surface joint portion 622 may be integrally formed, as shown in FIG. 6, and composed of a module body 626 with a hat or flange shape. The module body 626 may have an annular hat-shaped or flange-shaped structure with an L-shaped cross-section in which the bottom surface joint portion 621 and the top surface joint portion 622 are connected at an approximate right angle and have a through-hole space 627. As described above, the top surface joint portion 622 of the module body 626 may be inserted into the terminal accommodating hole 162 of the cap plate 61 and joined to the top surface of the cap plate 61 by being bent radially outward, while the bottom surface joint portion 621 may not pass through the terminal accommodating hole 162 and may be joined (e.g., affixed or connected to the bottom surface of the cap plate 61.

As described above, during manufacturing of the module body 626, the insulator 625 may be integrally formed by insert injection molding so that the insulator 625 may surround an inner circumferential surface of the internal through-hole space 627 and the insulator outer portion 624 may surround the outer circumferential surface of the top surface joint portion 622. Alternatively, the module body 626 and the insulator 625 may be separately manufactured and then assembled.

FIG. 7 is a cross-sectional view showing a coupling relationship of the first terminal 62 shown in FIG. 5.

Referring to FIG. 7, the insulator 625 may be attached to the inner circumferential surface of the internal through-hole space 627 of the bottom surface joint portion 621 and the top surface joint portion 622 (which together form the module body 626 in a hat or flange shape), and the terminal plate 623 may be inserted into the internal through-hole space 627 to be in contact with the insulator 625 (e.g., the terminal plate 623 may completely fill the internal through-hole space 627).

The outer portion 624 of the insulator 625 may be located at a connection corner between the top surface joint portion 622 and the bottom surface joint portion 621 on the outer circumferential surface of the top surface joint portion 622. A height difference h between the height of the insulator 625 and the height of the outer portion 624 (e.g., a distance along a vertical direction between topmost surfaces of the insulator 625 and the outer portion 624), as shown in FIG. 7, may be approximately the same as a thickness t1 of the top surface joint portion 622 (e.g., a thickness along a horizontal direction perpendicular to the vertical direction). This height difference h may be provided so that the top surface joint portion 622 maintains approximately the same plane when the top surface joint portion 622 is bent and comes into contact with the top surface of the cap plate 61.

FIG. 8 is a cross-sectional view of the terminal accommodating hole 162 of the cap plate 61.

Referring to FIG. 8, as described above, the terminal accommodating hole 162 may be a hole into which the top surface joint portion 622 of the first terminal 62 is inserted. A diameter of the terminal accommodating hole 162 may be approximately the same as a diameter of the top surface joint portion 622 of the first terminal 62. An upper recessed portion 164 may be formed around the top surface of the terminal accommodating hole 162, which is recessed so that when the inserted top surface j oint portion 622 of the first terminal 62 is bent and joined, a surface of the bent top surface joint portion 622 may be substantially flush with the top surface of the cap plate 61. For example, referring to FIG. 7, when an upper portion of the top surface j oint portion 622 of the first terminal 62 is bent radially outwardly (e.g., away from the terminal plate 623 and the insulator 625), the bent portion of the upper portion of the top surface joint portion 622 may fit into the upper recessed portion 164 to directly contact and be flush with the top surface of the cap plate 61 (FIG. 8).

Also, referring to FIG. 8, a lower recessed portion 165 may be formed around the bottom surface of the terminal accommodating hole 162, which is recessed so that when the inserted bottom surface j oint portion 621 of the first terminal 62 is joined, a surface of the bottom surface joint portion 621 may be substantially flush with the bottom surface of the cap plate 61. For example, referring to FIGS. 6 and 8, when the top surface joint portion 622 of the first terminal 62 is inserted through the terminal accommodating hole 162, the bottom surface joint portion 621 extending radially away from the top surface joint portion 622 (FIG. 6) may fit into the lower recessed portion 165 to directly contact and be flush with the bottom surface of the cap plate 61 (FIG. 8).

Therefore, a depth d1 of the upper recessed portion 164 of the terminal accommodating hole 162 may be approximately the same as the thickness t1 of the top surface joint portion 622 of the first terminal 62. A depth d2 of the lower recessed portion 165 of the terminal accommodating hole 162 may be approximately the same as a thickness t2 (e.g., in the vertical direction) of the bottom surface j oint portion 621 of the first terminal 62.

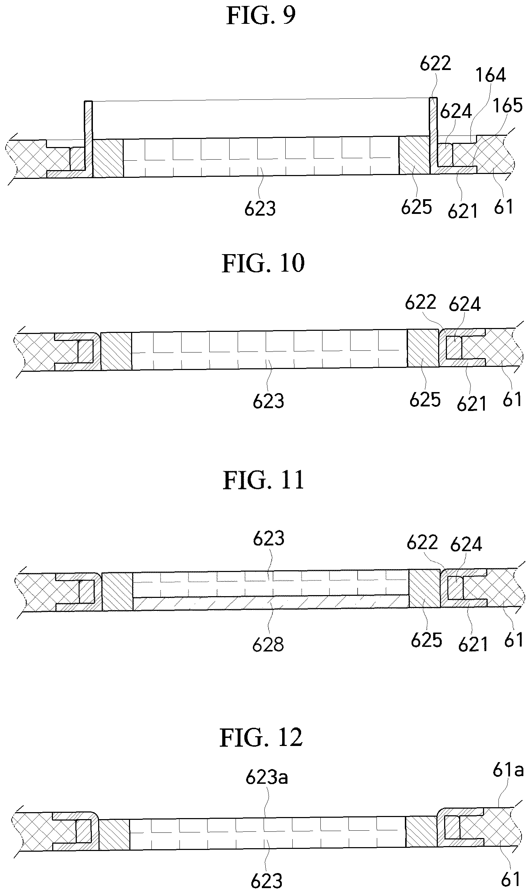

FIG. 9 is a cross-sectional view showing a state where the first terminal 62 of FIG. 7 is coupled to the cap plate 61 of FIG. 8.

Referring to FIG. 9, the top surface j oint portion 622 of the first terminal 62 is shown extending upwardly in the form of a vertical wall before being bent radially outwardly. The bottom surface joint portion 621 may be joined to (e.g., inserted into and connected to) the lower recessed portion 165 of the terminal accommodating hole 162 of the cap plate 61 by welding, or may be joined by press-fitting without welding when a clamping strength due to dimensional control is adequate. For example, referring to FIG. 9, after inserting the bottom surface joint portion 621 into the lower recessed portion 165, the bottommost surfaces of the bottom surface joint portion 621 and the cap plate 61 may be level with each other (e.g., coplanar with each other).

FIG. 10 shows a state where the top surface joint portion 622 is bent radially outwardly from the state shown in FIG. 9 and joined to the upper recessed portion 164 of the terminal accommodating hole 162 of the cap plate 61.

Referring to FIG. 10, after the top surface j oint portion 622 is bent radially outwardly, the top portion of the top surface joint portion 622 is inserted into the upper recessed portion 164 of the terminal accommodating hole 162 of the cap plate 61 (e.g., the topmost surface of the bent portion of the top surface joint portion 622 and the topmost surface of the cap plate 61 may be level or coplanar with each other). The joining of the top surface joint portion 622 with the upper recessed portion 164 may be achieved by welding or by press-fitting without welding. When bending the top surface joint portion 622 radially outwardly, a hot press may be used.

For example, referring to FIG. 10, the first terminal 62 may be completely joined to the cap plate 61. It can be seen that the terminal plate 623 is insulated from the cap plate 61 by the insulator 625. Also, it can also be seen that the top surface of the terminal plate 623 is substantially flush with the top surface of the cap plate 61 (e.g., the topmost surfaces of the terminal plate 623 and the cap plate 61 may be level or coplanar with each other).

FIG. 11 is a cross-sectional view of the first terminal 62 according to some other embodiments.

Referring to FIG. 11, an interfacial metal layer 628 may be attached to the bottom surface of the terminal plate 623. The first and second current collectors (41 and 42 in FIG. 2) connected to lead tabs (electrode tabs) of the electrode assembly may be welded to the bottom surface of the terminal plate 623, and when necessary for welding with this current collector plate, the interfacial metal layer 628 may be necessary. For example, when the current collector plate is made of copper and the terminal plate 623 is also made of copper, the interfacial metal layer 628 may not be required, but when the terminal plate 623 is made of aluminum, the interfacial metal layer 628 made of copper may be required for welding with the current collector plate.

FIG. 12 is a cross-sectional view of the terminal plate 623 relative to the cap plate 61.

For example, referring to FIG. 10, the top surface of the terminal plate 623 may be substantially flush (e.g., level or coplanar) with the top surface of the cap plate 61. In another example, referring to FIG. 12, a top surface 623a of the terminal plate 623 may be designed to be lower than a top surface 61a of the cap plate 61 (e.g., a hidden terminal structure). An advantage of the top surface 623a of the terminal plate 623 being lower than the top surface 61a of the cap plate 61 (e.g., relative to the bottommost surface of the cap plate 61) is that a position of the top surface of the cap plate 61 may be raised to the maximum within the external design specifications of a battery, making it possible to expand the dimensions of a battery case accordingly. Therefore, the external design specifications may be utilized to the fullest extent, which may allow greater battery capacity to be obtained, and a distance between the terminal plate 623 and the electrode assembly may be shortened to shorten a current path, which may be advantageous for high output and fast charging.

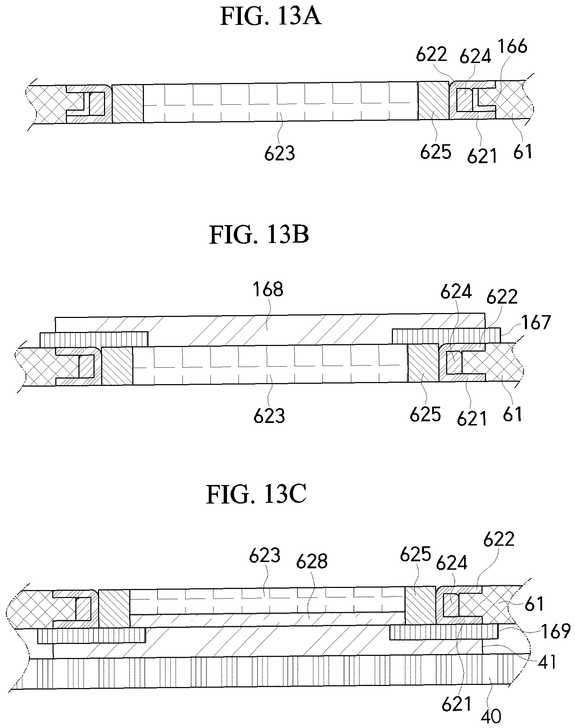

When manufacturing the secondary battery, additional sealing may be required to seal the electrolyte injected inside the case and/or generated gas. FIGS. 13A to 13C show embodiments of applying sealing during secondary battery manufacturing.

FIG. 13A shows a first sealing member 166 (e.g., a gasket) inserted between the outer circumferential surface of the first terminal 62 and the cap plate 61. The first sealing member 166 shown in FIG. 13A may prevent the electrolyte or gas from leaking out of the battery case by sealing between an outer surface of the insulator outer portion 624 and a joint surface of the bottom surface j oint portion 621 and the cap plate 61.

FIG. 13B shows a second sealing member 167 covering the top surface of the top surface joint portion 622 of the first terminal 62 and a part of the terminal plate 623 for sealing on an upper part (an outer side) of the cap plate 61. The second sealing member 167 of FIG. 13B may be supported by a bus bar 168 that connects the terminal plate 623 when arranging multiple secondary batteries to form a battery module.

FIG. 13C shows a third sealing member 169 covering the bottom surface of the bottom surface j oint portion 621 of the first terminal 62 and a part of a bottom surface of the terminal plate 623 for sealing on a lower part (a battery side) of the cap plate 61. The third sealing member 169 of FIG. 13C may be supported by the first current collector 41 that connects (e.g., via the first electrode tab 43 in FIG. 3) the electrode assembly 40 installed inside the battery case to the terminal plate 623.

For example, referring to FIGS. 13A to 13C, at least one of the first to third sealing members 166, 167, and 169 may be applied to the secondary battery. In another example, all of the first to third sealing members 166, 167, and 169 may be applied to the same secondary battery.

Actual shapes of the first to third sealing members 166, 167, and 169 expressed in cross-sectional views above may be annular with circular (as in FIG. 3) or rectangular (as in FIG. 4) shapes. For example, the first sealing member 166 may be circular with an annular shape in a top view, and may have an L-shaped cross-section surrounding an outer circumferential surface of the insulator outer portion 624. For example, the second sealing member 167 may be circular with an annular shape in a top view, and may have a flat linear shape in a cross-sectional view (e.g., the second sealing member 167 may cover the top surface j oint portion 622 of the first terminal 62, the insulator 625, and some of the terminal plate 623 from above, while exposing the center of the upper surface of the terminal plate 623). The third sealing member 169 may be circular with an annular shape in a top view, and may have a flat linear shape in a cross-sectional view (e.g., the third sealing member 169 may cover the bottom surface joint portion 621 of the first terminal 62, the insulator 625, and some of the terminal plate 623 from below, while exposing the center of the bottom surface of the terminal plate 623).

The first terminal 62 according to the embodiments described above may be a modular terminal (e.g., a terminal module that is a separable component) easily and simply assembled to the cap plate 61. That is, the first terminal 62 may be assembled with the cap plate 61 by inserting the first terminal 62 (i.e., a terminal module) into the terminal accommodating hole 162 formed in the cap plate 61 and joining (e.g., affixing or assembling) the bottom surface joint portion 621 and the top surface joint portion 622 of the first terminal 62 to the cap plate 61. Since such a modular terminal can be prepared in various sizes and shapes for each battery product model and easily assembled to the cap plate, advantages such as reduced design and manufacturing costs, shortened manufacturing time, and enhanced productivity for secondary batteries can be achieved.

The modular terminal of the present disclosure may be applied to a prismatic secondary battery with the top-tab structure as shown in FIG. 2 and a prismatic secondary battery with another structure (e.g., a side-tab structure), and other types of secondary batteries (e.g., a cylindrical battery, a coin type battery, and the like).

Hereinafter, a method for manufacturing a secondary battery including a modular terminal (i.e., the first terminal 62) described above will be described.

The secondary battery manufacturing method according to some embodiments may include manufacturing a case with an opening, manufacturing an electrode assembly accommodated in the case, manufacturing a cap plate with a terminal accommodating hole, manufacturing a terminal module (i.e., a modular terminal or the first terminal 62) electrically connected to the electrode assembly, assembling the terminal module to the cap plate, and inserting the electrode assembly into the case and joining the cap plate to the opening of the case. Here, assembling of the terminal module to the cap plate may include inserting the terminal module into the terminal accommodating hole formed in the cap plate and joining the terminal module to a top surface of the cap plate, and joining the terminal module inserted into the terminal accommodating hole to a bottom surface of the cap plate.

According to some embodiments, in the assembling of the terminal module to the cap plate, inserting the terminal module into the terminal accommodating hole and joining the terminal module to the top surface of the cap plate may include inserting a vertical wall to be inserted into a terminal accommodating hole formed in the cap plate and including an internal through-hole space into the terminal accommodating hole, and bending the terminal module radially outwardly from the through-hole space and joining the terminal module to the top surface of the cap plate.

According to some embodiments, the manufacturing of the terminal module may include forming a top surface joint portion inserted into the terminal accommodating hole formed in the cap plate, joined to a top surface of the cap plate, and having an internal through-hole space, forming a bottom surface joint portion inserted into the terminal accommodating hole and joined to a bottom surface of the cap plate, forming a terminal plate located in the internal through-hole space of the top surface joint portion, and forming an insulator configured to electrically insulate the terminal plate from the top surface joint portion and the bottom surface joint portion.

In addition, according to some embodiments, forming the terminal plate may include forming a top surface of the terminal plate to be flush with or lower than the top surface of the cap plate in the assembling of the terminal module to the cap plate.

In addition, according to some embodiments, the manufacturing of the cap plate may include forming an upper recessed portion around a top surface of the terminal accommodating hole, and forming a lower recessed portion around a bottom surface of the terminal accommodating hole.

A modular terminal according to the present disclosure can be easily assembled to a cap plate by being inserted and joined into a hole formed in the cap plate. Since such a modular terminal can be prepared in various sizes and shapes for each battery product model and easily assembled to the corresponding cap plate, advantages such as reduced design and manufacturing costs, shortened manufacturing time, and enhanced productivity for secondary batteries can be achieved.

Hereinafter, any material that may be usable for the secondary battery according to the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, or combinations thereof may be used.

The composite oxide may be a lithium transition metal composite oxide, and examples thereof may include a lithium nickel oxide, a lithium cobalt oxide, a lithium manganese oxide, a lithium iron phosphate compound, a cobalt-free nickel-manganese oxide, or a combination thereof.

As an example, a compound represented by any one of the following formulas may be used: LiₐA_{1-b}X_{b}O_{2-c}D1_{c} (0.90≤a≤1.8, 0≤b≤0.5, 0≤c≤0.05); LiₐMn_{2-b}X_{b}O_{4-c}D1_{c} (0.90≤a≤1.8, 0≤b≤0.5, 0≤c≤0.05); LiₐNi_{1-b-c}Co_{b}X_{c}O_{2-α}D1_{α} (0.90≤a≤1.8, 0≤b≤0.5, 0≤c≤0.5, 0<α<2); LiₐNi_{1-b-c}Mn_{b}X_{c}O_{2-α}D1_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); or LiₐFePO₄ (0.90≤a≤1.8).

In the above formulas: A may be Ni, Co, Mn, or a combination thereof; X may be Al, Ni, Co, Mn, Cr, Fe, Mg, Sr, V, a rare earth element, or a combination thereof; D1 may be O, F, S, P, or a combination thereof; G may be Al, Cr, Mn, Fe, Mg, La, Ce, Sr, V, or a combination thereof; and L1 may be Mn, Al, or a combination thereof.

A positive electrode for a lithium secondary battery may include a substrate and a positive electrode active material layer formed on the substrate. The positive electrode active material layer may include a positive electrode active material, and may further include a binder and/or a conductive material.

The content of the positive electrode active material is in a range of about 90 wt% to about 99.5 wt%, on the basis of about 100 wt% of the positive electrode active material layer, and the content of the binder and the conductive material may be in a range of about 0.5 wt% to about 5 wt%, respectively, on the basis of about 100 wt% of the positive electrode active material layer.

The substrate may be aluminum (Al).

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon negative electrode active material, which may include, e.g., crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si negative electrode active material or a Sn negative electrode active material may be used as the material capable of being doped and undoped with lithium. The Si negative electrode active material may be silicon, a silicon-carbon composite, SiOₓ (0<x<2), a Si alloy, or a combination thereof.

The silicon-carbon composite may be a composite of silicon and amorphous carbon. According to one or more embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer located on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. If an aqueous binder is used as the negative electrode binder, a cellulose compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate, an ester, an ether, a ketone, an alcohol solvent, an aprotic solvent, and may be used alone or in combination of two or more. If a carbonate solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride polymer or a (meth)acrylic polymer.

The inorganic material may include inorganic particles selected from Al₂O₃, SiO₂, TiO₂, SnO₂, CeO₄, MgO, NiO, CaO, GaO, ZnO, ZrO₂, Y₂O₃, SrTiO₃, BaTiO₃, Mg(OH)₂, boehmite, and combinations thereof.

The organic material and the inorganic material may be mixed in one coating layer or may be in the form of a coating layer containing an organic material and a coating layer containing an inorganic material that are laminated on each other.

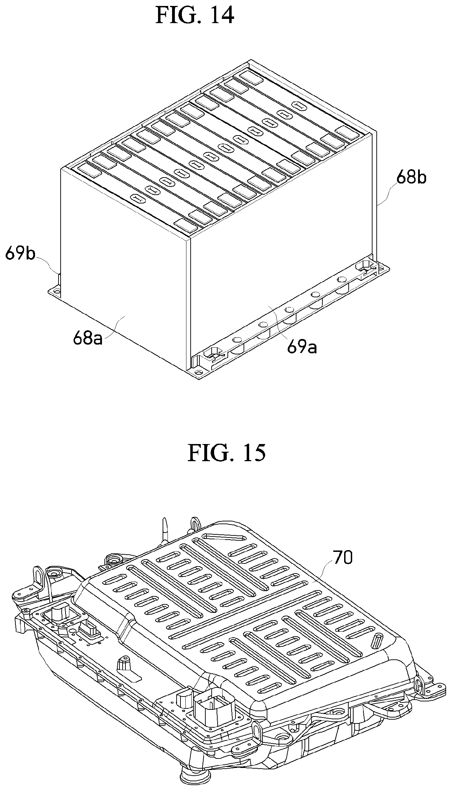

FIG. 14 is a top perspective view of a secondary battery module in which prismatic secondary batteries are arranged according to one or more embodiments of the present disclosure. With the increase in secondary battery capacity for driving electric vehicles or the like, a secondary battery module may be manufactured by arranging and connecting a plurality of secondary battery cells transversely and/or longitudinally.

Referring to FIG. 14, the plurality of secondary batteries may be arranged in a space defined by a pair of facing/opposite end plates 68a and 68b and a pair of facing/opposite side plates 69a and 69b. The secondary batteries may be designed appropriately in both arrangement (direction) and number to obtain desired voltage and current specifications.

FIG. 15 is a view schematically showing the configuration of a battery pack 70 according to one or more embodiments of the present disclosure.

Referring to FIG. 15, the battery pack 70, according to one or more embodiments of the present disclosure, may include an assembly to which individual batteries are electrically connected and a pack housing accommodating the same. In the drawings, for convenience of illustration, some components, including a bus bar, a cooling unit, external terminals for electrically connecting batteries, etc., are omitted.

The battery pack 70 may be mounted on (or in) a vehicle. The vehicle may be, e.g., an electric vehicle, a hybrid vehicle, e.g.a plug-in hybrid vehicle. The vehicle may be, e.g., a four-wheeled vehicle, a two-wheeled vehicle, etc.

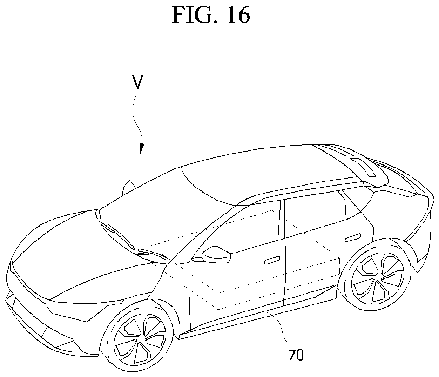

FIG. 16 is a view showing a vehicle V according to one or more embodiments of the present disclosure including the battery pack 70 shown in FIG. 15.

Referring to FIG. 15, the vehicle V, according to one or more embodiments of the present disclosure, may include the battery pack 70 according to one or more embodiments of the present disclosure. The vehicle V may operate by (e.g., may be powered by) receiving power from the battery pack 70.

By way of summation and review, example embodiments are directed to providing a modular terminal having a structure that can be easily assembled to a cap plate to form a cap assembly and capable of responding to secondary batteries of various shapes and sizes.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A terminal module, comprising:
a top surface joint portion insertable into a terminal accommodating hole in a cap plate of a secondary battery, the top surface joint portion being attachable to a top surface of the cap plate and having an internal through-hole space;
a bottom surface joint portion insertable into the terminal accommodating hole and attachable to a bottom surface of the cap plate;
a terminal plate in the internal through-hole space of the top surface joint portion; and
an insulator between the terminal plate and each of the top surface joint portion and the bottom surface joint portion.

2. The terminal module as claimed in claim 1, wherein the top surface joint portion includes a vertical wall surrounding the internal through-hole space, the vertical wall being bent radially outwardly from the through-hole space and attachable to the top surface of the cap plate.

3. The terminal module as claimed in claim 1 or 2, wherein the insulator of the terminal module is integral with the bottom surface joint portion and the top surface joint portion.

4. The secondary battery as claimed in any preceding claim, wherein the terminal plate of the terminal module includes an interfacial metal layer.

5. A secondary battery comprising:
a case with an opening;
an electrode assembly accommodated in the case; and
a cap assembly including:
a cap plate joined to the opening of the case, the cap plate including a terminal accommodating hole, and
a terminal module according to any preceding claim, wherein the terminal module is electrically connected to the electrode assembly, the terminal module including:
a top surface joint portion insertable into the terminal accommodating hole of the cap plate, the top surface joint portion being joined to a top surface of the cap plate and having an internal through-hole space,
a bottom surface joint portion inserted into the terminal accommodating hole and joined to a bottom surface of the cap plate,
a terminal plate in the internal through-hole space of the top surface joint portion, and
an insulator between the terminal plate and each of the top surface joint portion and the bottom surface joint portion.

6. The secondary battery as claimed in claim 5, wherein the terminal accommodating hole in the cap plate includes an upper recessed portion in the top surface of the cap plate and a lower recessed portion in the bottom surface of the cap plate.

7. The secondary battery as claimed in claim 5 or 6, wherein a top surface of the terminal plate of the terminal module is flush with or lower than the top surface of the cap plate.

8. The secondary battery as claimed in claim 5, 6 or 7, further comprising at least one of a first sealing member, a second sealing member, and a third sealing member, the first sealing member being between an outer circumferential surface of the terminal module and the cap plate, the second sealing member covering a top surface of the top surface j oint portion of the terminal module, and the third sealing member covering a bottom surface of the bottom surface joint portion of the terminal module.

9. A method of manufacturing a secondary battery, the method comprising:
manufacturing a case with an opening;
manufacturing an electrode assembly to be accommodated in the case;
manufacturing a cap plate with a terminal accommodating hole;
manufacturing a terminal module electrically connected to the electrode assembly;
assembling the terminal module to the cap plate; and
inserting the electrode assembly into the case and joining the cap plate to the opening of the case,
wherein assembling the terminal module to the cap plate includes:
inserting the terminal module into the terminal accommodating hole formed in the cap plate and joining the terminal module to a top surface of the cap plate; and
joining the terminal module inserted into the terminal accommodating hole to a bottom surface of the cap plate.

10. The method as claimed in claim 9, wherein:
manufacturing the terminal module includes forming a top surface joint portion of the terminal module, such that the top surface joint portion includes a vertical wall surrounding an internal through-hole space; and
inserting the terminal module into the terminal accommodating hole includes:
inserting the vertical wall of the terminal module into the terminal accommodating hole; and
bending the vertical wall radially outwardly from the through-hole space and joining the terminal module to the top surface of the cap plate.

11. The method as claimed in claim 8 or 9, wherein manufacturing the terminal module includes:
forming a top surface joint portion insertable into the terminal accommodating hole formed in the cap plate and joinable to the top surface of the cap plate, the top surface joint portion having an internal through-hole space;
forming a bottom surface joint portion insertable into the terminal accommodating hole and joinable to the bottom surface of the cap plate;
forming a terminal plate in the internal through-hole space of the top surface joint portion; and
forming an insulator configured to electrically insulate the terminal plate from the top surface joint portion and the bottom surface joint portion.

12. The method as claimed in claim 11, wherein forming the terminal plate includes forming a top surface of the terminal plate to be flush with or lower than the top surface of the cap plate in the assembling of the terminal module to the cap plate.

13. The method as claimed in any one of claims 9 to 12, wherein manufacturing the cap plate includes:
forming an upper recessed portion around a top surface of the terminal accommodating hole; and
forming a lower recessed portion around a bottom surface of the terminal accommodating hole.

14. A secondary battery module comprising a plurality of the secondary batteries according to any one of claims 5 to 8.

## Amended claims

### Amended claims in accordance with Rule 137(2) EPC.

1. A terminal module, comprising:
a top surface joint portion (622) insertable into a terminal accommodating hole (162, 163) in a cap plate (61) of a secondary battery, the top surface joint portion (622) being attachable to a top surface (61a) of the cap plate (61) and having an internal through-hole space (627);
a bottom surface joint portion (621) insertable into the terminal accommodating hole (162, 163) and attachable to a bottom surface of the cap plate (61);
a terminal plate (623) in the internal through-hole space (627) of the top surface joint portion (622); and
an insulator (625) between the terminal plate (623) and each of the top surface joint portion (622) and the bottom surface joint portion (621).

2. The terminal module as claimed in claim 1, wherein the top surface joint portion (622) includes a vertical wall surrounding the internal through-hole space (627), the vertical wall being bent radially outwardly from the through-hole space (627) and attachable to the top surface (61a) of the cap plate (61).

3. The terminal module as claimed in claim 1 or 2, wherein the insulator (625) of the terminal module is integral with the bottom surface joint portion (621) and the top surface joint portion (622).

4. The secondary battery as claimed in any preceding claim, wherein the terminal plate (623) of the terminal module includes an interfacial metal layer (628).

5. A secondary battery comprising:
a case (59) with an opening;
an electrode assembly (40) accommodated in the case (59); and
a cap assembly (60) including:
a cap plate (61) joined to the opening of the case (59), the cap plate (61) including a terminal accommodating hole (162, 163), and
a terminal module according to any preceding claim, wherein the terminal module is electrically connected to the electrode assembly (40), the terminal module including:
a top surface joint portion (622) insertable into the terminal accommodating hole (162, 163) of the cap plate (61), the top surface joint portion (622) being joined to a top surface (61a) of the cap plate (61) and having an internal through-hole space (627),
a bottom surface joint portion (621) inserted into the terminal accommodating hole (162, 163) and joined to a bottom surface of the cap plate (61),
a terminal plate (623) in the internal through-hole space (627) of the top surface joint portion (622), and
an insulator (625) between the terminal plate (623) and each of the top surface joint portion (622) and the bottom surface joint portion (621).

6. The secondary battery as claimed in claim 5, wherein the terminal accommodating hole (162, 163) in the cap plate (61) includes an upper recessed portion (164) in the top surface (61a) of the cap plate (61) and a lower recessed portion (165) in the bottom surface of the cap plate (61).

7. The secondary battery as claimed in claim 5 or 6, wherein a top surface (623a) of the terminal plate (623) of the terminal module is flush with or lower than the top surface (61a) of the cap plate (61).

8. The secondary battery as claimed in claim 5, 6 or 7, further comprising at least one of a first sealing member (166), a second sealing member (167), and a third sealing member (169), the first sealing member (166) being between an outer circumferential surface of the terminal module and the cap plate (61), the second sealing member (167) covering a top surface of the top surface joint portion (622) of the terminal module, and the third sealing member (169) covering a bottom surface of the bottom surface joint portion (621) of the terminal module.

9. A method of manufacturing a secondary battery, the method comprising:
manufacturing a case (59) with an opening;
manufacturing an electrode assembly (40) to be accommodated in the case (59);
manufacturing a cap plate (61) with a terminal accommodating hole (162, 163);
manufacturing a terminal module electrically connected to the electrode assembly (40);
assembling the terminal module to the cap plate (61); and
inserting the electrode assembly (40) into the case (59) and joining the cap plate (61) to the opening of the case (59),
wherein assembling the terminal module to the cap plate (61) includes:
inserting the terminal module into the terminal accommodating hole (162, 163) formed in the cap plate (61) and joining the terminal module to a top surface (61a) of the cap plate (61); and
joining the terminal module inserted into the terminal accommodating hole (162, 163) to a bottom surface of the cap plate (61).

10. The method as claimed in claim 9, wherein:
manufacturing the terminal module includes forming a top surface joint portion (622) of the terminal module, such that the top surface joint portion (622) includes a vertical wall surrounding an internal through-hole space (627); and
inserting the terminal module into the terminal accommodating hole (162, 163) includes:
inserting the vertical wall of the terminal module into the terminal accommodating hole (162, 163); and
bending the vertical wall radially outwardly from the through-hole space (627) and joining the terminal module to the top surface (61a) of the cap plate (61).

11. The method as claimed in claim 8 or 9, wherein manufacturing the terminal module includes:
forming a top surface joint portion (622) insertable into the terminal accommodating hole (162, 163) formed in the cap plate (61) and joinable to the top surface (61a) of the cap plate (61), the top surface joint portion (622) having an internal through-hole space (627);
forming a bottom surface joint portion (621) insertable into the terminal accommodating hole (162, 163) and joinable to the bottom surface of the cap plate (61);
forming a terminal plate (623) in the internal through-hole space (627) of the top surface joint portion (622); and
forming an insulator (625) configured to electrically insulate the terminal plate (623) from the top surface joint portion (622) and the bottom surface joint portion (621).

12. The method as claimed in claim 11, wherein forming the terminal plate (623) includes forming a top surface (623a) of the terminal plate (623) to be flush with or lower than the top surface (61a) of the cap plate (61) in the assembling of the terminal module to the cap plate (61).

13. The method as claimed in any one of claims 9 to 12, wherein manufacturing the cap plate (61) includes:
forming an upper recessed portion (164) around a top surface of the terminal accommodating hole (162, 163); and
forming a lower recessed portion (165) around a bottom surface of the terminal accommodating hole (162, 163).

14. A secondary battery module comprising a plurality of the secondary batteries according to any one of claims 5 to 8.
